# EUROPÄISCHE PATENTSCHRIFT

(11) **EP 2 317 095 B1**
(45) Veröffentlichungstag und Bekanntmachung des Hinweises auf die Patenterteilung: **08.07.2015**
(21) Anmeldenummer: 10172109.0
(22) Anmeldetag: 06.08.2010
(51) Int. Cl.: F02B 37/18

(54) **Stelleinrichtung für eine Ventilklappe**
Control device for a valve flap
Dispositif de réglage pour un clapet de soupape

(30) Priorität: 02.11.2009 DE 102009051623
(43) Veröffentlichungstag der Anmeldung: 04.05.2011
(73) Patentinhaber: Robert Bosch GmbH, 70442 Stuttgart (DE)
(72) Erfinder: Baeuerle, Michael, 71735 Eberdingen (DE)

(56) Entgegenhaltungen:
- DE-A1-102008 014 609
- US-A- 2 428 708
- US-A- 2 491 380
- US-A- 2 629 541

## Beschreibung

### Stand der Technik

Die Erfindung betrifft eine Stelleinrichtung für eine Ventilklappe und insbesondere eine Stellvorrichtung für eine Ventilklappe eines Waste-Gate-Ventils einer Aufladeeinrichtung mit den Merkmalen des Oberbegriffs des unabhängigen Anspruchs.

Es ist bekannt, dass moderne Aufladeinrichtungen für Brennkraftmaschinen Abgasturbolader verwenden, deren Turbinenteil für einen kleinen Abgasmassenstrom ausgelegt ist, so dass eine Brennkraftmaschine bereits bei niedrigen Drehzahlen ein hohes Drehmoment erreichen kann. Damit größere Abgasmassenströme den Abgasturbolader nicht überladen, wird ein sogenanntes Waste-Gate-Ventil verwandt, das einen Bypasskanal steuert, welcher die Turbine des Abgasturboladers umgeht. Das Waste-Gate-Ventil ist üblicherweise als Klappenventil mit einer durch eine Stelleinrichtung betätigbaren Ventilklappe ausgebildet. Bekannte Stelleinrichtungen verwenden beispielsweise einen pneumatischen Steller, der eine Stellstange verschiebt, die endseitig auf einen drehbeweglich gelagerten Schwenkarm einwirkt, an dem eine Welle festgelegt ist. Durch Drehung der Welle wird das Klappenventil geöffnet oder geschlossen. Eine solche Lösung ist beispielsweise aus der DE 42 43 448 A1 bekannt.

Außer den pneumatischen Stellern ist beispielsweise aus der DE 10 2008 014 609 A1 die Verwendung von elektrischen Drehstellern bekannt, die über einen Viergelenktrieb auf die Ventilklappe einwirken. Im Vergleich zu den pneumatischen Stellern sind mit den elektrischen Drehstellern wesentlich höhere Stellkräfte mit Werten von 200 N bis 500 N erreichbar. Bei hohen Drücken im Turbinenteil des Abgasturboladers ist damit eine höhere Dichtheit an der geschlossenen Ventilklappe des Waste-Gate-Ventils erreichbar, da eine größere Schließkraft bereitgestellt werden kann.

Aus der DE 10 2008 014 609 A1 ist ein Aktuator für ein Schaltelement einer Verbrennungskraftmaschine bekannt, der ein Viergelenktrieb und elastische Mittel aufweist. Bei geschlossener Ventilklappe werden die elastischen Mittel mittels eines elektrischen Stellers gespannt, während der Viergelenktrieb blockiert

Aus der US 2 491 380 ist eine Ventilklappe bekannt, die mittels einer Stelleinrichtung verstellbar ist. Die Stelleinrichtung weist einen Viergelenktrieb mit zwei Schwenkarmen und einem mit einem Federelement versehenes Übertragungsglied sowie einen Steller zum Schwenken eines ersten Schwenkarms auf. Der Viergelenktrieb ist derart ausgebildet, dass bei geschlossener Ventilklappe vom Steller ein sehr großes Haltemoment aufgewandt werden muss.

### Offenbarung der Erfindung

### Vorteile der Erfindung

Ein Viergelenktrieb weist eine Strecklage auf, in der ein eingangsseitiger Schwenkarm im Wesentlichen parallel zu einem Übertragungsglied verläuft, das wiederum auf einen ausgangseitigen Schenkarm einwirkt. Die Erfindung geht von der Überlegung aus, dass in der Stecklage des Viergelenktriebes vorteilhaft eine sehr große Erhöhung der auf die Ventilklappe wirkenden Schließkraft möglich ist. Jedoch führt in der Strecklage bereits ein geringfügiges Überdrehen des eingangsseitigen Schwenkarms zu einem Zurückschwenken des ausgangsseitigen Schwenkarms verbunden mit einer Öffnung der Ventilklappe. Verschleiß und temperaturbedingte Ausdehnungen sowie Toleranzen der Bauteile der Stelleinrichtung könnten außerdem bewirken, dass die geschlossene Lage der Ventilklappe in der Strecklage des Viergelenktriebes nicht mit ausreichender Dichtheit eingehalten werden kann. Die im Stand der Technik bekanten Stelleinrichtungen für die Ventilklappe eines Abgasturbolader-Waste-Gates sind so ausgelegt, dass ein großer Abstand zur Strecklage des Viergelenktriebes eingehalten wird, wenn sich die Ventilklappe in der geschlossenen Position befindet. Bei einem großen Abstand zur Strecklage muss der elektrische Steller jedoch eine relativ große Haltekraft dauerhaft ausbringen, um die Ventilklappe in der geschlossenen Stellung zu halten, was einen sehr hohen Strombedarf zur Folge hat.

Die erfindungsgemäße Stelleinrichtung mit den Merkmalen des unabhängigen Anspruchs weist demgegenüber den Vorteil auf, dass der Viergelenktrieb bei geschlossener Ventilklappe in die Strecklage gestellt ist und die strecklagenbedingte Krafterhöhung vorteilhaft zur Erhöhung der Dichtheit der geschlossenen Ventilklappe genutzt wird. Im Vergleich zu den im Stand der Technik bekannten Lösungen, welche einen großen Abstand von der Strecklage des Viergelenktriebes aufweisen, ist dadurch mit dem gleichen Steller eine erhebliche Kraftsteigerung der auf die Ventilklappe wirkenden Schließkraft möglich. Außerdem wird eine allmählich austretende Undichtheit des Klappenventils durch im Dauerbetrieb auftretenden Verschleiß vorteilhaft vermieden, wobei besonders vorteilhaft keine Erhöhung des Ausgangsmoments des Stellers zur Erzielung einer für die Dichtheit des Waste-Gate-Ventils ausreichenden Schließkraft erforderlich ist. Darüber hinaus wird vorteilhaft erreicht, dass die Ventilklappe in der geschlossenen Position ungebremst an den Anschlag gestellt werden kann, da dynamische Momentenspitzen beim schnellen Anfahren der Schließposition schonend gedämpft werden, was die Lebensdauer der Stelleinrichtung nicht unwesentlich erhöht. Aufgrund der dämpfenden Wirkung der elastischen Mittel, erübrigt sich eine Verringerung der Verstellgeschwindigkeit durch Bremsen der Klappenbewegung unmittelbar vor dem Anschlag, weshalb die Ansteuerung des Stellers vereinfacht werden kann und ein rasches und Zuverlässiges Schließen der Ventilklappe gewährleistet ist.

Die erfindungsgemäße Stelleinrichtung ist hier beispielhaft zur Anwendung an einem Waste-Gate-Ventil eines Abgasturboladers dargestellt, jedoch ohne darauf beschränkt zu sein. Die erfindungsgemäße Stelleinrichtung kann vielmehr bei allen Ventilklappe zur Anwendung gelangen, welche eine erhöhte Dichtheit in der geschlossenen Lage erfordern.

Besonders vorteilhaft ist, dass die elastischen Mittel während der Verstellung des Viergelenktriebes in die Strecklage mittels des Stellers gespannt werden, sobald die Ventilklappe an den Anschlag gestellt ist. Die Spannkraft der elastischen Mittel in der Strecklage des Viergelenktriebes sollte dabei größer oder gleich einer minimalen Schließkraft der Ventilklappe sein, welche wenigstens erforderlich ist, um die Ventilklappe in der geschlossenen Stellung dicht an den Anschlag zu drücken. Die elastischen Mittel können bei der Montage der Stelleinrichtung bereits eine Vorspannkraft aufweisen, wobei eine interne Begrenzung ein Ausfedem der mit der Vorspannkraft beaufschlagten elastischen Mittel verhindert. Die Vorspannkraft ist vorzugsweise so gewählt, dass die elastischen Mittel im gesamten Öffnungsbereich der Ventilklappe steif sind, da die dort auf die elastischen Mittel einwirkenden Kräfte deutlich kleiner als die Vorspannkraft sind. Beim Schließen der Ventilklappe gelangt diese zunächst an den Anschlag. Durch eine weiterer Beaufschlagung des Viergelenktriebs mittels des Stellers werden die elastischen Mittel zusätzlich zu der bereits vorhandenen Vorspannung gespannt beziehungsweise nachgespannt. Die daraus resultierende Spannkraft drückt die Ventilklappe in der geschlossenen Position dicht gegen den Anschlag.

Vorteilhafte Ausbildungen und Weiterentwicklungen der Erfindung werden durch die in den abhängigen Ansprüchen angegebenen Maßnahmen ermöglicht.

Besonders einfach ist die Ausbildung der elastischen Mittel als Federelemente. Vorteilhaft können die elastischen Mittel zwischen der Ventilklappe und dem Steller vorgesehen sein. So ist es beispielsweise denkbar, die elastischen Mittel zwischen die Ausgangsseite des Stellers, beispielsweise eines Drehstellers, und die Eingangsseite des Viergelenktriebes in Form einer Spiralfeder zu schalten.

Besonders bevorzugt ist jedoch ein Ausführungsbeispiel, bei dem die elastischen Mittel an dem Übertragungsglied vorgesehen sind, da sich die elastischen Mittel dann außerhalb des heißen Turbinengehäuses befinden und keinen Bauraum innerhalb des Turbinengehäuses oder innerhalb des Stellers erfordern.

Beispielsweise können die elastischen Mittel wenigstens eine an dem Übertragungsglied aufgenommene Federdose aufweisen, wobei das Übertragungsglied zwei mittels der Federdose gekoppelte zueinander parallele Stangenteile aufweist. Diese Ausführung ist besonders zuverlässig und kostengünstig herstellbar.

### Kurze Beschreibung der Zeichnungen

Ausführungsbeispiele der Erfindung sind in den Zeichnungen dargestellt und werden in der nachfolgenden Beschreibung näher erläutert. Es zeigen
- Figur 1: eine dem Verständnis der Erfindung dienende schematische Darstellung eines Viergelenktriebes außerhalb der Strecklage,
- Figur 2: eine dem Verständnis der Erfindung dienende schematische Darstellung des Viergelenktriebes aus Fig. 1 in der Strecklage,
- Figur 3: die Abhängigkeit einer auf die Ventilklappe wirkenden Schließkraft vom Verstellweg für eine erfindungsgemäßes Ausführungsbeispiel,
- Figur 4: ein Ausführungsbeispiel der Stelleinrichtung mit einer unter Zug am Übertragungsglied des Viergelenktriebes schließenden Ventilklappe,
- Figur 5: die erfindungsgemäße Stelleinrichtung in der Einbaulage am Abgasturbolader einer Brennkraftmaschine,
- Figur 6: einen Querschnitt durch einen als Federdose ausgebildeten Teil der erfindungsgemäßen Stelleinrichtung
- Figur 7: die Federdose aus Fig. 6 in der gespannten Stellung, nachdem die Ventilklappe an den Anschlag gestellt wurde,
- Figur 8: einen Querschnitt durch die Federdose senkrecht zur der in Fig. 6 oder Fig. 7 gezeigten Darstellung.

### Ausführungsformen der Erfindung

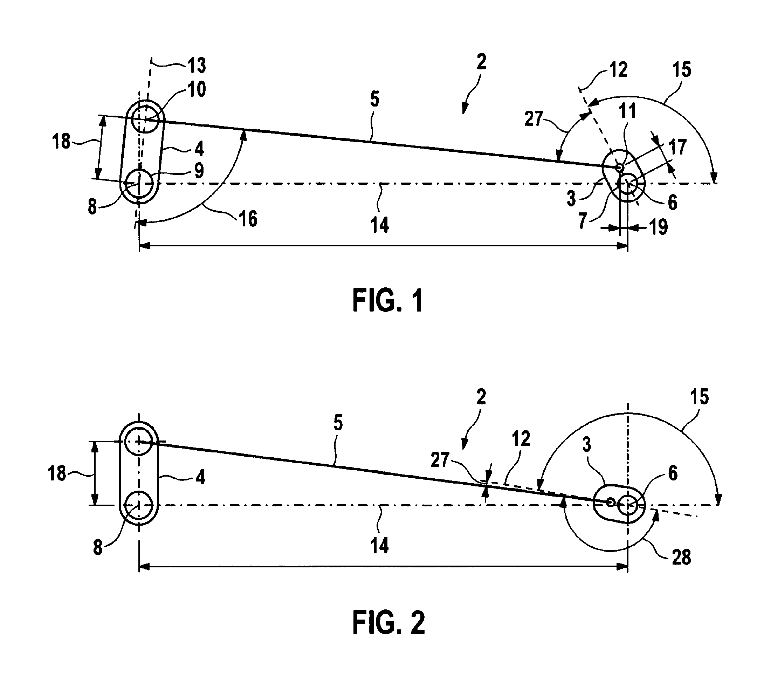

Die erfindungsgemäße Stelleinrichtung weist einen Viergelenktrieb 2 auf. Ein Viergelenktrieb ist in Figur 1 schematisch dargestellt. Der Viergelenktrieb weist einen ersten Schwenkarm 3 auf, der um eine erste Drehachse 6 drehbar gelagert ist. Der Antrieb des Schwenkarms 3 kann über eine auf der Drehachse 6 gelagerte Eingangswelle 7 erfolgen, die drehfest mit dem Schwenkarm 3 verbunden ist und von einem in Fig. 1 und Fig. 2 nicht dargestellten Steller mittelbar oder unmittelbar beaufschlagt wird. Der Steller ist beispielsweise ein elektrischer Drehsteller. An seinem von der ersten Drehachse 6 abweisenden freien Ende weist der erste Schenkarm 3 ein erstes Drehgelenk 11 auf, in dem ein Übertragungsglied 5 drehbar gelagert ist. Das Übertragungsglied 5 ist in dem gezeigten Ausführungsbeispiels stangenförmig ausgebildet, kann aber auch in anderer Weise ausgebildet sein. Durch den Abstand des ersten Drehgelenks 11 von der ersten Drehachse 6 wird eine für den Hebelarm wirksame Länge 17 des ersten Schwenkarms definiert. Durch den Mittelpunkt des ersten Drehgelenks 11 und durch die erste Drehachse 6 verläuft in Fig. 1 eine gestrichelt eingezeichnete Linie, welche die Längsachse 12 des ersten Schwenkarms 3 definiert. Das Übertragungsglied 5 ist mit einem von dem ersten Schwenkarm 3 entfernten Ende in einem zweiten Drehgelenk 10 gelagert, das an dem freien Ende eines zweiten Schwenkarms 4 gelagert ist. Der zweite Schwenkarm 4 ist um eine zweite Drehachse 8 drehbar gelagert. Durch den Abstand des zweiten Drehgelenks 10 von der zweiten Drehachse 8 wird eine für den Hebelarm wirksame Länge 18 des zweiten Schwenkarms 4 definiert. Durch den Mittelpunkt des zweiten Drehgelenks 10 und der zweiten Drehachse 8 verläuft in Fig. 1 eine gestrichelt eingezeichnete Linie, welche die Längsachse 13 des zweiten Schwenkarms 4 definiert. Der um die erste Drehachse 6 schwenkbare erste Schwenkarm 3, der um die zweite Drehachse schwenkbare zweite Schwenkarm 4 und das in den beiden Drehgelenken 10 und 11 gelagerte Übertragungsglied 5 bilden derart einen Viergelenktrieb 2.

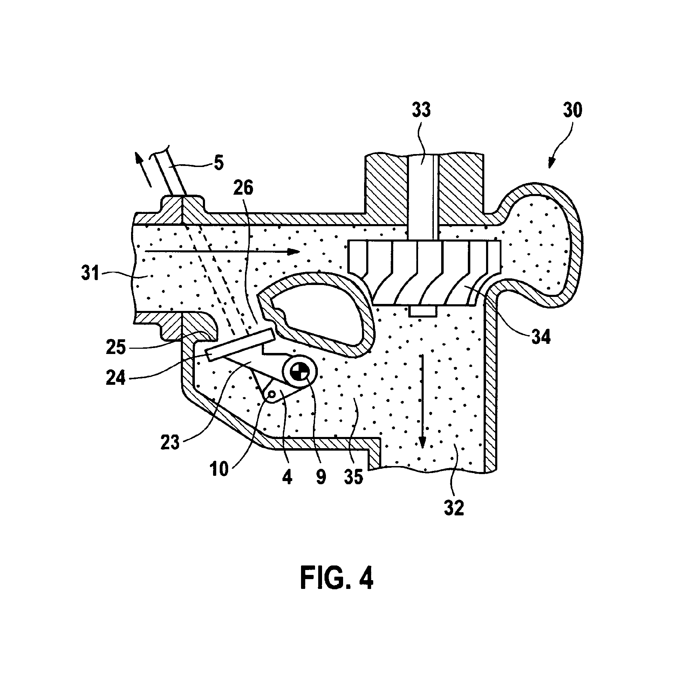

Auf der zweiten Drehachse 8 ist eine Ausgangswelle 9 des Viergelenktriebes 2 drehfest mit dem zweiten Schwenkarm 4 verbunden. Durch Drehung der Ausgangswelle 9 ist, wie in Fig. 4 gezeigt ist, ein im Turbinenteil eines Abgasturboladers angeordneter Schwenkhebel 23 drehbar, an dessen freien Ende eine Ventilklappe 24 angeordnet ist. Die Ventilklappe kann aber auch in anderer Weise durch den zweiten Schwenkarm 4 des Viergelenktriebes 2 angetrieben werden. Grundsätzlich kann bei einer Bewegung des Übertragungsgliedes 5 in Fig. 1 nach links die Ventilklappe auf Zug oder auf Druck belastet werden. Bei hohen Schließkräften ist eine Belastung auf Zug jedoch vorteilhaft in Hinblick auf die Belastungen des Gestänges am Viergelenktrieb. Die Gefahr eines Ausknickens des Gestänges wird so reduziert. Diese Variante mit Belastung auf Zug ist in Fig. 4 dargestellt.

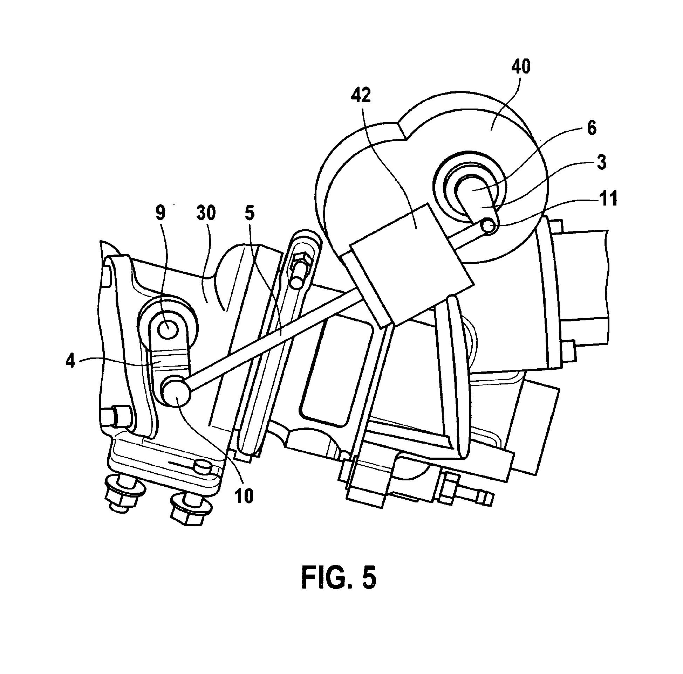

Fig. 4 zeigt einen Querschnitt durch das Turbinengehäuse 30 eine Abgasturboladers. Das Turbinenrad 34 ist auf einer Welle 33 gelagert, die an ihrem nicht dargestellten anderen Ende ein ebenfalls nicht dargestelltes Verdichterrad des Abgasturboladers antreibt. Abgas strömt über einen Einlass 31 in das Turbinengehäuse, expandiert dort über die Turbine 34 und verlässt das Turbinengehäuse 32 durch den Ausgang 32. Zwischen Einlass 31 und Auslass 32 ist ein Bypasskanal 35 angeordnet, der über ein Waste-Gate-Ventil geöffnet und geschlossen wird. Das Waste-Gate-Ventil umfasst eine Ventilöffnung 26, die mittels der Ventilklappe 24 verschließbar ist, wobei sich die Ventilklappe 24 in der geschlossenen Stellung an einem Anschlag 25 des Turbinengehäuses 30 abstützt. Der Anschlag 25 kann aber auch an einem in das Turbinengehäuse 30 eingesetzten Einsatz vorgesehen sein. Wie oben erläutert ist die Ventilklappe 24 am Schwenkhebel 23 angeordnet, der von der Ausgangswelle 9 des Viergelenktriebs 2 angetrieben wird. Wie in Fig. 4 erkennbar ist, wird durch Zug am Übertragungsglied 5, wenn sich dieses in Fig. 5 in Pfeilrichtung bewegt, durch Drehung des Schwenkhebels 23 eine Schließkraft auf die Ventilklappe 24 ausgeübt. Es ist aber auch möglich, die Stelleinrichtung so auszubilden, dass die Ventilklappe bei Druck auf das Übertragungsglied 5 schließt, wenn sich also das Übertragungsglied in Fig. 5 entgegen der Pfeilrichtung bewegt.

Wie weiterhin in Fig. 1 erkennbar ist, wird durch die erste Drehachse 6 und die zweite Drehachse 8 eine Ebene 14 aufgespannt. Der Winkel zwischen der Längsachse 12 des ersten Schwenkarms 3 und der Ebene 14 definiert einen Schwenkwinkel 15 des ersten Schwenkarms 3. Der Winkel zwischen der Längsachse 13 des zweiten Schwenkarms 4 und der Verbindungslinie zwischen dem ersten Drehgelenk 11 und dem zweiten Drehgelenk 10 entlang des Übertragungsgliedes 5 definiert einen Stellwinkel 16. Die Projektion des ersten Drehgelenks 11 in einer Richtung senkrecht zur Ebene 14 auf die Ebene 14 weist einen Abstand von der Drehachse 6 auf, welcher Abstand einen Verstellweg 19 definiert. Die in Fig. 1 gezeigte Lage könnte beispielsweise den Nullpunkt des Verstellweges 19 definieren. Jede andere Kalibrierung ist natürlich möglich. In der in Fig. 1 gezeigten Lage beträgt ein Verstellwinkel 27 wischen der Längsachse 12 und dem Übertragungsglied 5 beispielsweise etwa 40°. Der zugeordnete Stellwinkel 16 beträgt beispielsweise etwa 90°, so dass die vom Übertragungsglied 5 übertragene Kraft rechtwinklig am zweiten Schwenkarm 4 angreift. In dieser Lage gelangt die Ventilklappe 24 der erfindungsgemäßen Stelleinrichtung vorzugsweise zur Anlage an dem Anschlag 25. Durch anschließendes Aufbauen einer Schließkraft wird die Ventilklappe 24 in noch näher zu beschreibender Weise gegen den Anschlag 25 gedrückt.

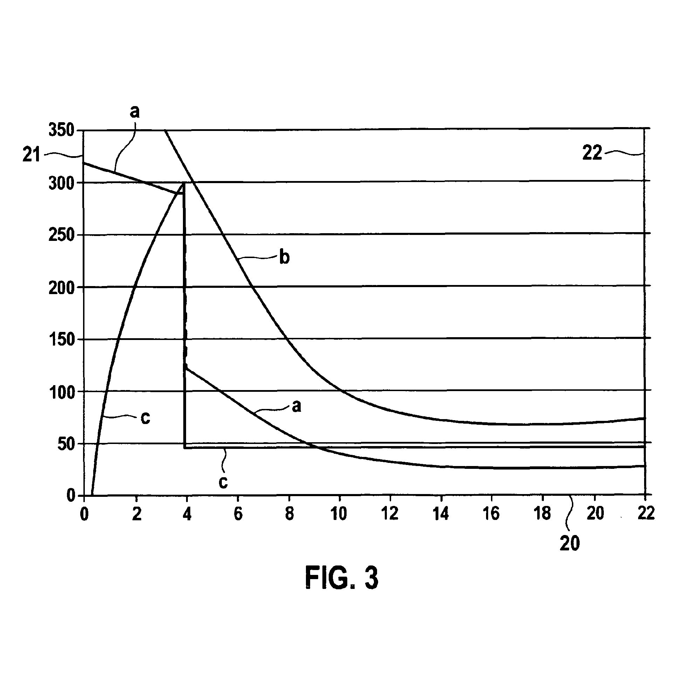

Fig. 3 zeigt den Zusammenhang zwischen dem Verstellweg 19 und der Schließkraft auf die Ventilklappe 24 für eine erfindungsgemäße Stelleinrichtung. In Fig. 3 ist auf der linken Ordinate 21 die Schließkraft in N aufgetragen. Auf der Abzisse 20 ist der Verstellweg 19 in mm aufgetragen. Die rechte Ordinate skaliert die Stromaufnahme des Drehstellers. Der Verlauf a zeigt den Verlauf der Schließkraft bei einer maximal zulässigen Dauerbestromung des elektrischen Drehstellers 40 ohne Überhitzungsgefahr. Der Verlauf b zeigt den Verlauf der Schließkraft bei Vollbestromung des Drehstellers, welche nur für kurze Zeit zulässig ist, um eine Überhitzung des elektrischen Drehstellers wegen der thermischen Belastung und/oder der Verlustleistung des DC-Motors des elektrischen Drehstellers zu vermeiden. Der Verlauf c stellt die relative Stromaufnahme des elektrischen Drehstellers dar.

In Fig. 3 entspricht beispielsweise ein Verstellweg von 4 mm der in Fig. 1 gezeigten Lage der Stelleinrichtung, in welcher die Ventilklappe 24 gerade zur Anlage an dem Anschlag 25 gelangt. Bei einer Vergrößerung des Verstellweges ausgehend von der 4 mm Position durch Drehung des ersten Schwenkarms 3 in Fig. 1 nach rechts wird die Schließkraft schnell verringert und die Ventilklappe 24 öffnet. Bei einer Verringerung der Verstellweges in Richtung der 0 mm Marke in Fig. 3 durch Drehung des ersten Schwenkarms 3 in Fig. 1 nach links wird der Viergelenktrieb in die Strecklage gestellt. Würde der erste Schwenkarm 3 über die Strecklage hinaus überdreht (der Verstellweg in Fig. 3 wäre dann negativ skaliert), so würde die Ventilklappe 24 wieder öffnen. Daraus folgt, dass der Stelleinrichtung in dem gezeigten Ausführungsbeispiel ein maximaler Reservehub von beispielsweise 4 mm verbleibt, um den Viergelenktrieb in die Strecklage zu stellen. Wie insbesondere auf Fig. 3 gut zu erkennen ist, zeigt der Verlauf a der Schließkraft bei 4 mm einen großen Sprung, welcher einer starken Steigerung der Schließkraft entspricht. Dies bedeutet, dass nachdem die Ventilklappe bei einem Verstellweg von 4 mm in Fig. 3 den Anschlag 25 erreicht durch weiteres Verstellen des Viergelenktriebes in die Strecklage bis zur 0 mm Marke in Fig. 3 eine Steigerung der Schließkraft um mehr als 150% möglich wird.

Fig. 2 zeigt den Viergelenktrieb 2 in der Strecklage. Die Strecklage ist dadurch definiert, dass die Längsachse 12 im Wesentlichen parallel zu der Verbindungslinie zwischen dem ersten Drehgelenkt 11 und dem zweiten Drehgelenk 10 entlang des Übertragungsgliedes 5 verläuft. Im Wesentlichen parallel bedeutet in diesem Zusammenhang, dass der Verstellwinkel 27 zwischen der Längsachse 12 des ersten Schwenkarms 3 und dem Übertragungsglied 5 zwischen -15° und 15° liegt. Mit dem Bezugszeichen 28 ist in Fig. 2 der zum Verstellwinkel 27 komplementäre Winkel bezeichnet. In der in Fig. 2 dargestellten Position ist der Verstellweg in Fig. 3 etwa bei 0 mm angelangt. Die Nullposition des Verstellweges ist natürlich beliebig und die hier dargestellten Werte dienen nur dem Verständnis der Erfindung. Wie bereits erwähnt, lässt sich aus den Darstellungen in Fig. 1 bis Fig. 3 erkennen, dass ab dem in Fig. 1 gezeigten Schwenkwinkel 15, bei welchem die Ventilklappe 24 zur Anlage an dem Anschlag 25 gelangt, für den Verstellweg 19 ein Betrag des Reservehubs von beispielsweise 4 mm verbleibt, um den Viergelenktrieb 2 in die Strecklage zu drehen. Erfindungsgemäß wird dieser Reservehub genutzt, um ein elastischen Mittels 42, 50 mit einer Spannkraft zu beaufschlagen, wie noch näher erläutert wird. Zuvor soll allerdings noch auf ein Ausführungsbeispiel des Aufbaus der elastischen Mittel 42, 50 eingegangen werden.

Fig. 5 zeigt ein Ausführungsbeispiel der erfindungsgemäßen Stelleinrichtung, bei welcher das elastische Mittel als eine an dem Übertragungsglied 5 angeordnete Federdose 42 ausgebildet ist, welche einen Federspeicher darstellt. Die Federdose 42 ist zwischen ein zweiteiliges Übertragungsglied 5 geschaltet. In Fig. 5 ist der Steller 40 erkennbar, welcher vorzugsweise als elektrischer Drehsteller ausgebildet ist. Es ist natürlich auch möglich, den ersten Schwenkarm 3 in dem Gehäuse des Stellers 4 zu integrieren, so dass lediglich das Übertragungsglied 5 aus dem Gehäuse des Stellers herausgeführt ist. Der erste Schwenkarm 3 kann dann innerhalb des Stellergehäuses in unterschiedlicher Weise und auch unter Zwischenschaltung weiterer Getriebekomponenten (d.h. mittelbar) mit einem Drehmoment beaufschlagt werden. In diesem Fall wirkt das aus dem Stellergehäuse hinausragende Übertragungsglied 5 äußerlich wie ein linearbewegliches Stellglied. Während diese Ausführungsform nur äußerlich den Eindruck eines Linearstellers erweckt, der ein Übertragungsglied 5 antreibt, so handelt es sich dennoch um einen durch einen Drehsteller zumindest mittelbar beaufschlagten Viergelenktrieb. Diese Ausführung ist von der erfindungsgemäßen Lösung, wonach ein Viergelenktrieb einen von einem Steller verdrehbaren ersten Schwenkarm aufweist, ausdrücklich mit umfasst.

Kurzzeitig höhere Momente zum Laden des Federspeichers können durch den elektrischen Drehsteller problemlos dargestellt werden, da dieser typischerweise kurzzeitig mit hohen Strömen belastbar ist. Ausgangsseitig wirkt der zweite Schwenkarm 4 auf eine Ausgangswelle 9 ein, welche in den Innenraum des Turbinengehäuses 30 geführt ist, um dort die Ventilklappe zu betätigen.

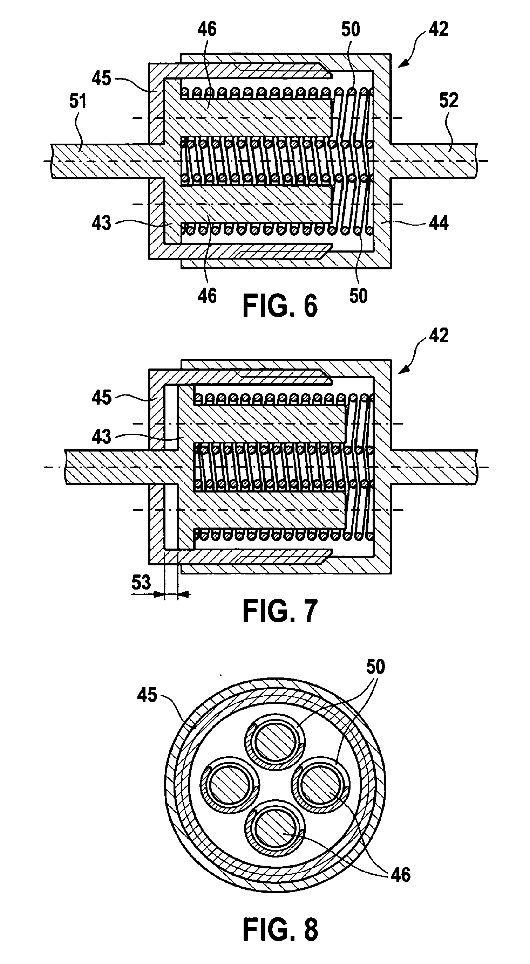

Ein Ausführungsbeispiel für den Aufbau der Federdose 42 ist in Fig. 6 und Fig. 7 dargestellt. Das Übertragungsglied 5 ist im gezeigten Ausführungsbeispiel als zweiteiliges Stangenteil ausgebildet. Ein mit dem zweiten Drehgelenk 10 verbundenes erstes Stangenteil 51 weist an seinem der Federdose 42 zugewandten Ende einen Kolben 43 auf, der verschiebbar in einen mit einem Deckelteil 45 verschlossenen, vorzugsweise zylindrischen Becher 44 eingreift. Das Deckelteil 45 weist zu diesem Zweck eine Aufnahmeöffnung für das erste Stangenteil 51 auf. Der Becher 44 ist an einem der Federdose 42 zugewandten Ende eines mit dem ersten Drehgelenk 11 verbundenen zweiten Stangenteils 52 angeordnet ist. Der Kolben 43 stützt sich über wenigstens ein Federelement 50 am Boden des Bechers 44 ab und wird im unbelasteten Zustand der Federdose 41 durch eine Vorspannkraft des wenigstens einen Federelements 50 gegen die Innenseite des Deckelteils 45 angedrückt. Das Deckelteil 45 stellt eine Begrenzung dar, die ein Ausfedern der Federdose verhindert. Das Deckelteil 45 kann in den Becher 44 vorzugsweise eingeschraubt werden, so dass für den Anschlag des Kolbens 43 eine definierte Lage einstellbar ist. Die Vorspannkraft des wenigstens einen Federelementes 50 ist so eingestellt, dass im gesamten Öffnungsbereich der Ventilklappe, wenn diese also nicht an dem Anschlag 25 anliegt, die elastischen Mittel quasi steif sind, da die dort auf die Federdose 42 einwirkenden Kräfte kleiner als die Vorspannkraft der Federdose sind. Weiterhin sind an dem Kolben 43 in dem gezeigten Ausführungsbeispiel vier zylinderförmige Vorsprünge 46 ausgebildet, die von vier Schraubenfederelementen 50 umgeben sind. Selbstverständlich kann die Anzahl der Federelemente verwandt werden und beispielsweise nur ein Federelement aufweisen. Auch der Aufbau der Federdose 42 kann verändert werden.

Es versteht sich, dass das in den Figuren 5 bis 8 gezeigte Ausführungsbeispiel lediglich eine bevorzugte Ausführungsform der Erfindung darstellt. Es sind weitere Ausführungsformen denkbar, bei denen die elastischen Mittel nicht als Federdose ausgebildet sind. Auch ist es nicht erforderlich, dass die elastischen Mittel an dem Übertragungsglied 5 angeordnet sind. Es ist beispielsweise auch möglich, die elastischen Mittel in Form einer Spiralfeder auszubilden, die zwischen den Drehsteller 40 und die Eingangswelle 7 des Viergelenktriebes geschaltet ist. Das in Fig. 5 bis Fig. 8 gezeigte Ausführungsbeispiel ist jedoch besonders einfach herzustellen und erlaubt eine hohe Zuverlässigkeit der Stelleinrichtung.

Bei einer Betätigung der Stelleinrichtung wird ausgehend von der in Fig. 1 gezeigten Lage, in der die Ventilklappe 24 gerade zur Anlage an dem Anschlag 25 gelangt, der Viergelenktrieb 2 weiter in die in Fig. 2 gezeigte Strecklage verstellt. Dabei wird der Reservehub von beispielsweise 4 mm dazu verwandt, den Federspeicher der Federdose 42 zu laden, das heißt, der Kolben 43 wird um den Hub 53 in Fig. 7 nach rechts bewegt und die Federelemente 52 entsprechend gespannt beziehungsweise nachgespannt. Diese Spannkraft (Summe aus Vorspannkraft und zusätzlich aufgebauter Spannkraft nach Erreichen des Anschlages 25) wirkt auf die Ventilklappe, welche dadurch in der geschlossenen Stellung gedrückt wird. Da der Viergelenktrieb in der Strecklage eine sehr große Schließkraft aufbringt (Verlauf a in Fig. 3) wird eine sehr große Spannkraft in der Federdose aufgebaut. Es versteht sich, dass die Kraft zum Laden der Federdose durch den elektrischen Steller aufgebracht werden muss. Es ist anhand des oben beschriebenen Verlaufes b in Fig. 3 erkennbar, dass der elektrische Drehsteller 40 problemlos kurzzeitig hohe Kräfte aufbringen kann, um den Federspeicher zu laden.

Bei einem eventuellen geringfügigen Überdrehen des Viergelenktriebes oder bei verschleißbedingten Toleranzänderungen wird die Ventilklappe durch die Wirkung des Federspeichers weiterhin zuverlässig in die geschlossene Stellung gedrückt. Die Spannkraft des Federspeichers in der Strecklage des Viergelenktriebes 2 ist dabei größer oder gleich einer minimalen Schließkraft der Ventilklappe 24 eingestellt, welche wenigstens erforderlich ist, um die Ventilklappe in der geschlossenen Stellung dicht an den Anschlag 25 zu drücken. Es ist aber auch möglich und sinnvoll, die Ventilklappe mit einer zusätzlichen Kraftreserve zu beaufschlagen. Der Verlauf a in Fig. 3 zeigt, dass die Ventilklappe 24 durch die Verstellung in die Strecklage des Viergelenktriebes mit einer erheblich größeren Schließkraft beaufschlagt wird (Sprung in Fig. 3 an der 4 mm Marke).

In der Strecklage von Fig. 2 ist das Übertragungsglied 5 letztlich im Wesentlichen parallel zu der Längsachse des ersten Schwenkarms 3 angeordnet, so dass zum Halten der Ventilklappe 24 in der geschlossenen Position durch den Drehsteller im Unterschied zum Stand der Technik keine große Kraft mehr erforderlich ist. Dies wird durch eine Reduzierung der Stromaufnahme des Drehstellers anhand des Verlaufes c in Fig. 3 zwischen der 4 mm Marke und der 0 mm Marke deutlich. Es versteht sich, dass in der Stecklage der Hebelarm zwischen dem Übertragungsglied 5 und dem Schwenkarm 3 sehr klein beziehungsweise Null wird, so dass eine auf das Übertragungsglied 5 wirkende Rückstellkraft, welche durch die geladene Federdose ständig sowohl auf die Ventilklappe als auch auf das Übertragungsglied einwirkt, sich im Wesentlichen am Lager der Eingangswelle abstützt, den Schwenkarm jedoch nicht rotatorisch belastet, weshalb die Stromversorgung des elektrischen Drehstellers vorteilhaft reduziert werden kann.

## Patentansprüche

1. Stelleinrichtung für eine Ventilklappe (24), insbesondere für eine Ventilklappe eines Waste-Gate-Ventils einer Aufladeeinrichtung, umfassend einen Viergelenktrieb (2), der einen mittels eines Stellers (40), vorzugsweise mittels eines elektrischen Stellers, mittelbar oder unmittelbar verdrehbaren ersten Schwenkarm (3) aufweist, an dessen freien Ende ein Übertragungsglied (5) drehbeweglich gelagert ist, welches Übertragungsglied (5) einen die Ventilklappe (24) verstellenden zweiten Schwenkarm (4) betätigt, der an seinem freien Ende gleichfalls drehbeweglich mit dem Übertragungsglied (5) verbunden ist, wobei ein Winkel zwischen einer Längsachse (13) des zweiten Schwenkarms (4) und dem Übertragungsglied (5) einen Stellwinkel (16) definiert und ein Winkel zwischen einer Längsachse (12) des ersten Schwenkarms (3) und dem Übertragungsglied (5) einen Schwenkwinkel (15) definiert und in einer Lage, in der die Ventilklappe (24) zur Anlage an einem Anschlag (25) gelangt, der Stellwinkel (16) etwa 90° und der Schwenkwinkel (15) etwa 40° beträgt und elastische Mittel (42, 50) vorgesehen sind, die in einer Strecklage des Viergelenktriebes (2), in welcher eine Längsachse (12) des ersten Schwenkarms (3) im Wesentlichen parallel zu dem Übertragungsglied (5) verläuft, die in dieser Lage an den Anschlag (25) gestellte und geschlossene Ventilklappe (24) mit einer Spannkraft beaufschlagen, wobei die elastischen Mittel (42, 50) während der Verstellung des Viergelenktriebes (2) in die Strecklage mittels des Stellers (40) gespannt werden, sobald die Ventilklappe (24) an den Anschlag (25) gestellt ist.

2. Stelleinrichtung nach Anspruch 1, **dadurch gekennzeichnet, dass** die elastischen Mittel (42, 50) als Dämpfungsmittel wirken, welche ein Aufprallen der Ventilklappe (24) auf den Anschlag (25) beim Schließen der Ventilklappe dämpfen.

3. Stelleinrichtung nach Anspruch 1, **dadurch gekennzeichnet, dass** die auf die Ventilklappe (24) in der Strecklage des Viergelenktriebes (2) wirkende Spannkraft der elastische Mittel größer oder gleich einer minimalen Schließkraft der Ventilklappe (24) ist, welche wenigstens erforderlich ist, um die Ventilklappe in der geschlossenen Stellung dicht an den Anschlag (25) zu drücken.

4. Stelleinrichtung nach Anspruch 1, **dadurch gekennzeichnet, dass** die elastischen Mittel (42, 59) Federelemente (50) umfassen.

5. Stelleinrichtung nach Anspruch 1, **dadurch gekennzeichnet, dass** die elastischen Mittel (42, 50) an dem Übertragungsglied (5) vorgesehen sind.

6. Stelleinrichtung nach Anspruch 5, **dadurch gekennzeichnet, dass** die elastischen Mittel (42, 59) wenigstens eine an dem Übertragungsglied (5) aufgenommene Federdose (42) aufweisen.

7. Stelleinrichtung nach Anspruch 6, **dadurch gekennzeichnet, dass** das Übertragungsglied (5) zwei mittels der Federdose (42) gekoppelte zueinander parallele Stangenteile (51, 52) aufweist.

8. Stelleinrichtung nach Anspruch 7, **dadurch gekennzeichnet, dass** ein erstes Stangenteil (51) an seinem der Federdose (42) zugewandten Ende einen Kolben (43) aufweist, der gegen die Kraft wenigstens eines Federelementes (50) verschiebbar in einen mit einem Deckelteil (45) verschlossenen Becher (44) eingreift, welcher Becher (44) an dem der Federdose (42) zugewandten Ende eines zweiten Stangenteils (52) angeordnet ist, wobei sich der Kolben (43) über wenigstens ein Federelement (50) am Boden des Bechers (44) abstützt.

9. Stelleinrichtung nach Anspruch 8, **dadurch gekennzeichnet, dass** der Becher (44) in einer Position, in welcher die Ventilklappe (24) nicht an den Anschlag (25) gestellt ist, durch die Spannkraft des wenigstens einen Federelements (50) mit einer Vorspannkraft gegen die Innenseite des Deckelteils (45) angedrückt wird.

10. Stelleinrichtung nach Anspruch 1, **dadurch gekennzeichnet, dass** der Steller (40) ein Drehsteller ist.

## Claims

1. Actuation device for a valve flap (24), in particular for a valve flap of a wastegate valve of a supercharging device, comprising a four-joint coupling mechanism (2) which has a first pivot arm (3), which can be indirectly or directly rotated by way of an actuator (40), preferably by way of an electric actuator, and on the free end of which a transmission element (5) is mounted in rotatable fashion, which transmission element (5) operates a second pivot arm (4) which adjusts the valve flap (24) and which, at its free end, is likewise connected in rotatable fashion to the transmission element (5), wherein an angle between a longitudinal axis (13) of the second pivot arm (4) and the transmission element (5) defines an actuation angle (16), and an angle between a longitudinal axis (12) of the first pivot arm (3) and the transmission element (5) defines a pivot angle (15), and in a position in which the valve flap (24) comes into contact with a stop (25), the actuation angle (16) is approximately 90° and the pivot angle (15) is approximately 40°, and elastic means (42, 50) are provided which, in a stretched position of the four-joint coupling mechanism (2), in which a longitudinal axis (12) of the first pivot arm (3) runs substantially parallel to the transmission element (5), exert a bracing force on the valve flap (24) which is in contact with the stop (25) and closed in this position, wherein, during the adjustment of the four-joint coupling mechanism (2) into the stretched position by means of the actuator (40), the elastic means (42, 50) are braced as soon as the valve flap (24) has come into contact with the stop (25).

2. Actuation device according to Claim 1, **characterized in that** the elastic means (42, 50) act as damping means which dampen an impact of the valve flap (24) against the stop (25) during the closing of the valve flap.

3. Actuation device according to Claim 1, **characterized in that** the bracing force, which acts on the valve flap (24) in the stretched position of the four-joint coupling mechanism (2), of the elastic means is greater than or equal to a minimum closing force of the valve flap (24) which is the minimum required to press the valve flap sealingly against the stop (25) in the closed position.

4. Actuation device according to Claim 1, **characterized in that** the elastic means (42, 59) comprise spring elements (50).

5. Actuation device according to Claim 1, **characterized in that** the elastic means (42, 50) are provided on the transmission element (5).

6. Actuation device according to Claim 5, **characterized in that** the elastic means (42, 59) have at least one spring capsule (42) held on the transmission element (5).

7. Actuation device according to Claim 6, **characterized in that** the transmission element (5) has two mutually parallel rod parts (51, 52) which are coupled by means of the spring capsule (42).

8. Actuation device according to Claim 7, **characterized in that** a first rod part (51) has, on its end facing toward the spring capsule (42), a piston (43) which engages, so as to be movable counter to the force of at least one spring element (50), into a cup (44) which is closed off by way of a cover part (45), which cup (44) is arranged on that end of a second rod part (52) which faces toward the spring capsule (42), wherein the piston (43) is supported on the base of the cup (44) by way of at least one spring element (50).

9. Actuation device according to Claim 8, **characterized in that**, in a position in which the valve flap (24) is not in contact with the stop (25), the cup (44) is pressed with a preload force against the inner side of the cover part (45) by the bracing force of the at least one spring element (50).

10. Actuation device according to Claim 1, **characterized in that** the actuator (40) is a rotary actuator.

## Revendications

1. Dispositif de réglage pour un clapet de soupape (24), en particulier pour un clapet de soupape d'une soupape de décharge d'un dispositif de suralimentation, comprenant un quadrilatère articulé (2) qui présente un premier bras pivotant (3) pouvant tourner de manière directe ou indirecte au moyen d'un actionneur (40), de préférence au moyen d'un actionneur électrique, à l'extrémité libre duquel est supporté de manière mobile en rotation un organe de transmission (5), lequel organe de transmission (5) actionne un deuxième bras pivotant (4) déplaçant le clapet de soupape (24), lequel est connecté à son extrémité libre également de manière mobile en rotation à l'organe de transmission (5), un angle entre un axe longitudinal (13) du deuxième bras pivotant (4) et l'organe de transmission (5) définissant un angle de réglage (16) et un angle entre un axe longitudinal (12) du premier bras pivotant (3) et l'organe de transmission (5) définissant un angle de pivotement (15) et, dans une position dans laquelle le clapet de soupape (24) parvient en appui contre une butée (25), l'angle de réglage (16) valant approximativement 90° et l'angle de pivotement (15) valant approximativement 40° et des moyens élastiques (42, 50) étant prévus, lesquels, dans une position étirée du quadrilatère articulé (2), dans laquelle un axe longitudinal (12) du premier bras pivotant (3) s'étend essentiellement parallèlement à l'organe de transmission (5), sollicitent le clapet de soupape (24) fermé et placé dans cette position contre la butée (25) avec une force de tensionnement, les moyens élastiques (42, 50), pendant le déplacement du quadrilatère articulé (2), étant tendus dans la position étirée au moyen de l'actionneur (40), dès que le clapet de soupape (24) est placé contre la butée (25).

2. Dispositif de réglage selon la revendication 1, **caractérisé en ce que** les moyens élastiques (42, 50) agissent en tant que moyens d'amortissement qui, lors de la fermeture du clapet de soupape, amortissent un impact du clapet de soupape (24) contre la butée (25).

3. Dispositif de réglage selon la revendication 1, **caractérisé en ce que** la force de tensionnement des moyens élastiques agissant sur le clapet de soupape (24) dans la position étirée du quadrilatère articulé (2) est supérieure ou égale à une force de fermeture minimale du clapet de soupape (24) qui est au moins nécessaire pour presser le clapet de soupape dans la position fermée hermétiquement contre la butée (25).

4. Dispositif de réglage selon la revendication 1, **caractérisé en ce que** les moyens élastiques (42, 59) comprennent des éléments de ressort (50).

5. Dispositif de réglage selon la revendication 1, **caractérisé en ce que** les moyens élastiques (42, 50) sont prévus au niveau de l'organe de transmission (5).

6. Dispositif de réglage selon la revendication 5, **caractérisé en ce que** les moyens élastiques (42, 59) présentent au moins une boîte de ressort (42) reçue au niveau de l'organe de transmission (5).

7. Dispositif de réglage selon la revendication 6, **caractérisé en ce que** l'organe de transmission (5) présente deux parties de tige (51, 52) parallèles l'une à l'autre et accouplées au moyen de la boîte de ressort (42).

8. Dispositif de réglage selon la revendication 7, **caractérisé en ce qu'**une première partie de tige (51) présente, au niveau de son extrémité tournée vers la boîte de ressort (42), un piston (43) qui s'engage de manière déplaçable à l'encontre de la force d'au moins un élément de ressort (50) dans un pot (44) fermé par une partie de couvercle (45), lequel pot (44) est disposé au niveau de l'extrémité d'une deuxième partie de tige (52) tournée vers la boîte de ressort (42), le piston (43) s'appuyant par le biais d'au moins un élément de ressort (50) contre le fond du pot (44).

9. Dispositif de réglage selon la revendication 8, **caractérisé en ce que** le pot (44), dans une position dans laquelle le clapet de soupape (24) n'est pas placé contre la butée (25), est pressé par la force de tensionnement de l'au moins un élément de ressort (50) avec une force de précontrainte contre le côté intérieur de la partie de couvercle (45).

10. Dispositif de réglage selon la revendication 1, **caractérisé en ce que** l'actionneur (40) est un actionneur rotatif.
